# DEMANDE DE BREVET EUROPEEN

(11) **EP 1 614 534 A1**
(43) Date de publication de la demande: **11.01.2006**
(21) Numéro de dépôt: 05013083.0
(22) Date de dépôt: 17.06.2005
(51) Int. Cl.: B32B 27/32

(54) **Materiau dit alveolaire**

(30) Priorité: 18.06.2004 FR 0406626; 19.10.2004 FR 0411049
(71) Demandeur: GAILLON S.A.S., 69830 St. Georges de Reneins (FR)
(72) Inventeur: Dupoyet, Guy, 69740 Genas (FR); Gaiffe, Xavier, 69460 Blace (FR)

(57) **Abrégé**

Ce matériau comprend deux parois de base (22) formant les faces principales du matériau (20) et des cloisons (23) reliées à ces parois de base (22).

Selon l'invention,
- les cloisons (23), et éventuellement la partie interne d'au moins une des parois de base (22), de ce matériau sont en une matière thermoplastique non expansée (20a), et
- au moins une des parois de base (22) de ce matériau, ou uniquement la partie externe de cette paroi de base (22), est en une matière thermoplastique expansée (20b).

Le procédé comprend les étapes consistant à :
a) mouler, au niveau d'au moins une des faces extérieures des parois de base (22) du matériau (20), une matière expansible (20b) pouvant s'expanser pendant une durée déterminée ;
   - utiliser un conformateur (11) comprenant des plaques (11a) de contention des faces principales du matériau (20) dans le sens de l'épaisseur de ce matériau, et
   - maintenir le matériau (20) dans le conformateur (11) pendant la durée nécessaire à l'expansion complète de ladite matière expansible (20b).

## Description

La présente invention concerne un matériau dit "alvéolaire", que l'on trouve habituellement soit sous forme de plaque ou de feuille, soit sous forme de profilés, et un procédé d'obtention de ce matériau.

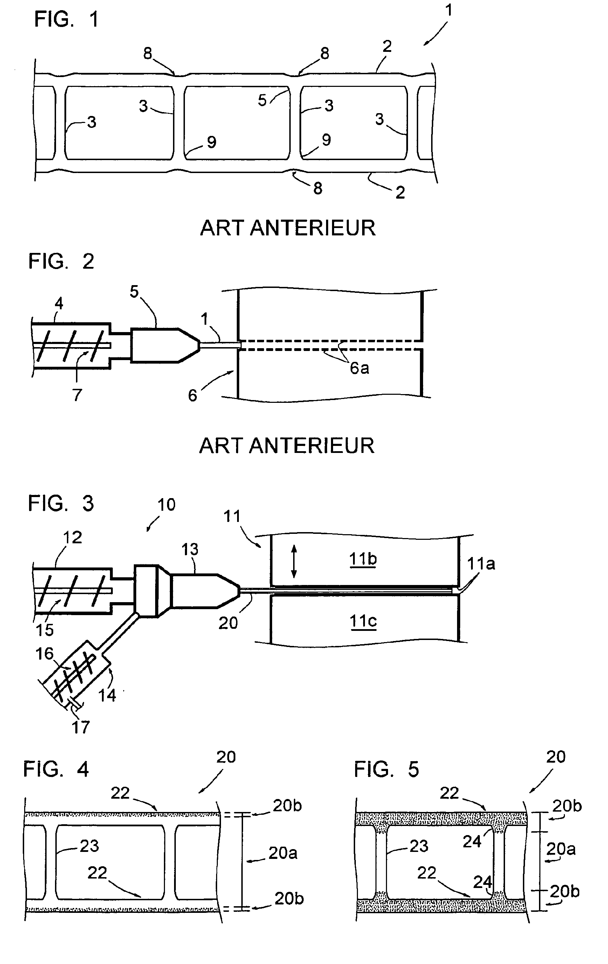

La figure 1 montre à échelle agrandie un matériau 1 de ce type, qui comprend deux parois de base 2, formant les faces principales du matériau, et des cloisons 3 perpendiculaires à ces parois de base 2, maintenant ces demières à distance l'une de l'autre. Ce matériau est notamment en matière thermoplastique, lesdites parois de base 2 et cloisons 3 étant réalisées par une même opération de moulage, en particulier par extrusion.

La figure 2 montre de manière très schématique une machine de fabrication de ce matériau, comprenant un cylindre chauffant 4 dans lequel la matière est fondue, une filière d'extrusion 5 et un conformateur 6 dans lequel le matériau 1 est placé le temps de son refroidissement. Le cylindre 4 contient une vis 7 de mise de la matière en pression. Le conformateur 6 comprend des parois parallèles 6a placées à une distance l'une de l'autre légèrement supérieure à l'épaisseur que doit avoir le matériau 1. Ces parois 6a comprennent des orifices d'aspiration permettant de faire plaquer les parois de base 2 du matériau 1 contre elles afin de donner au matériau 1 une épaisseur parfaitement constante.

Ce genre de matériau est bien connu et est d'utilisation courante notamment pour la réalisation de boîtes d'emballage, d'intercalaires de palettes de manutention ou de panneaux d'affichage, lorsqu'il s'agit de plaques ou de feuilles, ou pour la réalisation de planchers ou de panneaux, lorsqu'il s'agit de profilés.

Ce genre de matériau a cependant pour inconvénient important de présenter, sur les faces extérieures de ces parois de base 2, des dépressions allongées 8 au droit des cloisons 3. Ces dépressions 8 résultent du retrait de la matière lors de son refroidissement, ce retrait se produisant de manière différenciée aux droits des cloisons 3 et entre ces cloisons compte tenu des épaisseurs différentes de la matière en ces différentes zones (phénomène bien connu dit des "chaudes de retrait"). Ces retraits existent d'autant plus qu'il est courant de prévoir des congés 9 au niveau des zones de jonction des cloisons 3 avec les parois de base 2, afin de renforcer la résistance du matériau à la déformation "en parallélogramme". Ces surfaces extérieures irrégulières limitent l'utilisation du matériau dans certaines applications requérant des surfaces lisses, en particulier pour la réalisation d'impressions.

Un autre inconvénient de ce genre de matériau est d'être généralement réalisé en des matières qui, si elles sont bien adaptées à un moulage par extrusion, ne permettent pas en revanche une très bonne tenue des matières d'impression telles que des encres ou des peintures. Tel est en particulier le cas des polyoléfines couramment utilisées pour la fabrication de ce genre de matériau, compte tenu de la nature semi-cristalline de ces matières. Il est certes possible d'augmenter l'imprimabilité du matériau au moyen d'un traitement électrostatique dit "Corona" mais ce traitement a pour inconvénient, outre la nécessité de sa mise en oeuvre, de ne pas être très pérenne.

La relative rigidité de ces matières est en outre peu favorable à l'accroche des matières d'impression sur les faces extérieures des parois de base.

La présente invention vise à remédier à l'ensemble de ces inconvénients.

Le document n° US 5,914,175, décrit une structure de panneau de construction comprenant deux panneaux alvéolaires fixés l'un à l'autre de telle sorte que les cloisons d'un panneau soient perpendiculaires aux cloisons de l'autre panneau. Les cloisons de ces panneaux sont moins épaisses que les parois de base de ces mêmes panneaux, et l'épaisseur des cloisons est petite par rapport à l'épaisseur totale d'un panneau. Les panneaux peuvent être formés en des compositions de matières plastiques à cellules fermées.

Le panneau selon ce document ne remédie pas aux inconvénients précités.

Le document n° WO 00/30845 décrit un panneau multicouches composite ayant une couche centrale en matériau expansé à haute densité et au moins une couche latérale à structure en nid d'abeilles ou en grille, cette couche latérale ayant, sur au moins une de ses faces et de préférence sur les deux, un revêtement en matière plastique à haut module de résistance. Le panneau peut comprendre une ou plusieurs couches de rigidification, par exemple à structure en nids d'abeilles, en barres, en bandes ou en grille.

Le panneau selon ce document ne remédie pas non plus aux inconvénients précités.

Le document GB 2 120 167 décrit une structure de panneau déformable destiné à être utilisé dans des bâtiments lors d'opérations de moulage de béton, la déformabilité de tels panneaux permettant une déformabilité du bâtiment et donc une adaptabilité de ce dernier à d'éventuels mouvements de terrain.

Ce panneau comprend des parois latérales en matériau résistant à l'eau et une âme en matériau cellulaire pouvant être formée par des blocs allongés, parallèles entre eux, en matériau cellulaire. Les parois latérales sont collées à l'âme.

Le panneau selon ce document ne remédie pas non plus aux inconvénients précités des panneaux "alvéolaires" utilisés notamment pour la réalisation de boîtes d'emballage ou de panneaux d'affichage.

Le matériau concerné comprend, de manière connue en soi, deux parois de base formant les faces principales du matériau et des cloisons reliées à ces parois de base.

Selon l'invention,
- les cloisons, et éventuellement la partie interne d'au moins une des parois de base, sont en une matière thermoplastique non expansée, et
- au moins une des parois de base, ou uniquement la partie externe de cette paroi de base, est en une matière thermoplastique expansée.

Le procédé selon l'invention comprend, de manière connue en soi, les étapes consistant à :
a) mouler une matière thermoplastique pour former le matériau ;
b) introduire le matériau dans un conformateur immédiatement après moulage, et
c) maintenir ce matériau dans ce conformateur le temps du refroidissement du matériau.

Selon l'invention,
- à l'étape a), on moule, au niveau d'au moins une des faces extérieures des parois de base du matériau, une matière expansible pouvant s'expanser pendant une durée déterminée ;
- à l'étape b), on utilise un conformateur comprenant des plaques de contention des faces principales du matériau dans le sens de l'épaisseur de ce matériau, et
- à l'étape c), on maintient le matériau dans le conformateur pendant la durée nécessaire à l'expansion de ladite matière expansible.

L'expansion de ladite matière expansible se produit ou se poursuit dans le conformateur et permet, conjointement auxdites plaques de contention, l'obtention d'un matériau dont les faces extérieures des parois de base sont particulièrement planes, l'expansion de la matière expansible compensant les retraits précités se produisant au droit des cloisons du matériau.

La matière expansée a également pour avantage de présenter des micro-irrégularités de surface qui permettent de piéger les matières d'impression telles que des encres ou des peintures- Une accroche satisfaisante de ces matières d'impression peut ainsi être obtenue, sans nécessiter de recourir systématiquement à un traitement dit "Corona".

En outre, la structure poreuse de cette matière expansée confère à la surface de cette matière un léger degré de souplesse favorisant l'uniformité du dépôt des matières d'impression sur elle.

Lorsqu'au moins une paroi de base est en matière expansée, cette matière expansée peut avantageusement s'étendre jusqu'aux zones de jonction des cloisons à cette paroi de base.

Cette matière expansée permet d'éviter l'existence de zones de matière pleine au niveau de ces zones de jonction, et contribue donc à limiter, ou à éliminer, le risque de retrait de la matière sur la face extérieure de la paroi de base correspondante.

Il devient alors possible de donner à ces zones de jonction des épaisseurs supérieures à celles des cloisons, notamment sous forme de congés, afin de renforcer la résistance du matériau à la déformation "en parallélogramme", sans pour autant augmenter le risque précité de retrait.

De préférence, le moulage de ladite matière thermoplastique et de ladite matière expansible est réalisé par coextrusion.

Ladite matière thermoplastique et ladite matière expansible peuvent être des matières différentes ou une même matière. L'expansion de la matière expansible peut être réalisée soit par injection d'un gaz dans cette matière, par exemple de l'azote ou du gaz carbonique, soit par addition d'un agent chimique d'expansion, par exemple hydroxyde d'aluminium ou bicarbonate de sodium.

Par ailleurs, lorsque la matière constituant le matériau est une polyoléfine, cette matière est avantageusement chargée d'une charge minérale, par exemple de type talc ou craie, ou d'une charge organique, par exemple de type fibres ou particules de bois, ou fibres ou particules végétales, notamment de chanvre.

Cette charge permet l'obtention d'une meilleure stabilité dimensionnelle du matériau, d'une plus grande rigidité de ce matériau, d'un coût de fabrication diminué, et d'une meilleure capacité à être fixé par clouage, vissage ou agrafage.

Le pourcentage de charges peut varier entre 5 et 80 % en poids du matériau, voire peut aller jusqu'à 90 % dans le cas où la polyoléfine est un polypropylène.

L'invention sera bien comprise, et d'autres caractéristiques et avantages de celle-ci apparaîtront, en référence au dessin schématique annexé, représentant, à titre non limitatif, un exemple de mise en oeuvre.

La figure 3 est une vue très schématique d'un dispositif de mise en oeuvre du procédé qu'elle concerne ;

la figure 4 est une vue partielle, à échelle agrandie, du matériau obtenu par ce procédé, selon une forme de réalisation, et

la figure 5 est une vue partielle, à échelle agrandie, du matériau obtenu par ce procédé, selon une autre forme de réalisation.

La figure 3 représente une machine 10 de coextrusion et un conformateur 11 de réception du matériau 20 extrudé.

La machine 10 comprend un cylindre chauffant principal 12 relié à une entrée de la filière de coextrusion 13 et un cylindre chauffant secondaire 14 relié à une autre entrée de la filière de coextrusion 13, ces cylindres 12, 14 contenant des vis respectives 15, 16 de mise en pression des matières thermoplastiques qu'ils contiennent.

Le cylindre principal 12 contient une matière thermoplastique 20a destinée à former la majeure partie du matériau 20 à obtenir, c'est-à-dire, en référence à la figure 4, les cloisons 23 et les parties internes des parois de base 22 de ce matériau raccordées à ces cloisons 23.

Le cylindre secondaire 14 contient une matière thermoplastique 20b destinée à former les parties externes des parois de base 22. Ce cylindre 14 comprend une arrivée de gaz 17 au niveau de son volume interne, ce gaz étant destiné à être mélangé à la matière contenue par ce cylindre. Ce gaz tend à s'échapper de la matière 20b après extrusion et permet ainsi de conférer à cette matière une propriété d'expansibilité pendant une durée supérieure à la durée de la phase d'extrusion du matériau 20 et d'introduction de celui-ci dans le conformateur 11.

Ce dernier comprend deux parois planes parallèles 11a solidaires chacune d'une partie 11b, 11c, ces parties 11b, 11c étant mobiles l'une par rapport à l'autre dans le sens du rapprochement ou de l'écartement de ces parois 11 a. Chaque paroi 11 a est très lisse et est régulée en température pour permettre le refroidissement désiré du matériau 20.

En pratique, les deux matières précitées 20a, 20b sont coextrudées au moyen de la filière 13 puis le matériau 20 ainsi obtenu est immédiatement introduit dans le conformateur 11, dans lequel il est maintenu pendant la durée nécessaire à l'expansion de ladite matière expansible 20b.

Comme cela est visible sur la figure 4, le matériau 20 obtenu comprend des cloisons 23 et des parties internes de parois de base 22 en une matière thermoplastique non expansée 20a, et des parties externes de parois de base 22 en une matière thermoplastique expansée 20b. Grâce à l'expansion de cette matière 20b, les faces extérieures des parois de base 22 sont parfaitement planes, cette expansion compensant les retraits 8 précités se produisant au droit des cloisons 23. Les plaques de contention 11 a permettent de maintenir cette expansion dans la limite de l'épaisseur que doit avoir le matériau 20.

La matière expansée 20b se trouvant au niveau des faces extérieures des parois de base 22 a également pour avantage de présenter des micro-irrégularités de surface qui permettent de piéger les matières d'impression telles que des encres ou des peintures et d'obtenir ainsi une accroche satisfaisante de ces matières d'impression, ce qui permet généralement d'éviter de recourir à un traitement dit "Corona".

La figure 5 montre une autre mise en oeuvre de l'invention, dans laquelle la matière expansée 20b forme l'intégralité des parois de base 22 et s'étend en outre jusqu'aux zones 24 de jonction des cloisons 23 à ces parois de base 22. Ces zones de jonction 24 sont sous forme de congés et ont par conséquent des épaisseurs supérieures à celles des cloisons 23.

La présence de matière expansée au niveau de ces zones de jonction 24 permet de contribuer à limiter, ou à éliminer, le risque de retrait de la matière sur la face extérieure des parois de base 22.

II va de soi que l'invention n'est pas limitée aux formes de réalisation décrites ci-dessus à titre d'exemples mais qu'elle s'étend à toutes les formes de réalisations couvertes par les revendications ci-annexées.

## Revendications

1. Matériau dit "alvéolaire" (20), c'est-à-dire comprenant deux parois de base (22) formant les faces principales du matériau (20) et des cloisons (23) reliées à ces parois de base (22), **caractérisé en ce que** :
- ses cloisons (23), et éventuellement la partie interne d'au moins une de ses parois de base (22), sont en une matière thermoplastique non expansée (20a), et
- au moins une de ses parois de base (22), ou uniquement la partie externe de cette paroi de base (22), est en une matière thermoplastique expansée (20b).

2. Matériau selon la revendication 1, **caractérisé en ce qu'**au moins une paroi de base (22) est en matière expansée (20b) et **en ce que** cette matière expansée (20b) s'étend jusqu'aux zones de jonction des cloisons (23) à cette paroi de base (22).

3. Matériau selon la revendication 1 ou la revendication 2, **caractérisé en ce que** les zones de jonction des cloisons (23) à une paroi de base (22) ont des épaisseurs supérieures à celle des cloisons (23), et présentent notamment des congés.

4. Matériau selon l'une des revendications 1 à 3, **caractérisé en ce que** la matière constituant le matériau est une polyoléfine, et **en ce que** cette matière est chargée d'une charge minérale, par exemple de type talc ou craie, ou d'une charge organique, par exemple de type fibres ou particules de bois, ou fibres ou particules végétales, notamment de chanvre.

5. Matériau selon la revendication 4, **caractérisé en ce que** le pourcentage de charges varie entre 5 et 80 % en poids du matériau, voire peut aller jusqu'à 90 % dans le cas où la polyoléfine est un polypropylène.

6. Procédé d'obtention d'un matériau (20) dit "alvéolaire" selon l'une des revendications 1 à 5, c'est-à-dire ayant deux parois de base (22) formant les faces principales du matériau (20) et des cloisons (23) reliées à ces parois de base (22), comprenant les étapes consistant à :
a) mouler une matière thermoplastique (20a) pour former le matériau (20) ;
b) introduire le matériau (20) dans un conformateur (11) immédiatement après moulage, et
c) maintenir ce matériau (20) dans ce conformateur (11) le temps du refroidissement du matériau (20) ;
procédé **caractérisé en ce que** :
- à l'étape a), on moule, au niveau d'au moins une des faces extérieures des parois de base (22) du matériau (20), une matière expansible (20b) pouvant s'expanser pendant une durée déterminée ;
- à l'étape b), on utilise un conformateur (11) comprenant des plaques (11a) de contention des faces principales du matériau (20) dans le sens de l'épaisseur de ce matériau, et
- à l'étape c), on maintient le matériau (20) dans le conformateur (11) pendant la durée nécessaire à l'expansion de ladite matière expansible (20b).

7. Procédé selon la revendication 6, **caractérisé en ce que** le moulage de ladite matière thermoplastique (20a) et de ladite matière expansible (20b) est réalisé par coextrusion.

8. Procédé selon la revendication 6 ou la revendication 7, **caractérisé en ce que** ladite matière thermoplastique et ladite matière expansible sont des matières différentes.

9. Procédé selon la revendication 6 ou la revendication 7, **caractérisé en ce que** ladite matière thermoplastique et ladite matière expansible sont une même matière.

10. Procédé selon l'une des revendications 6 à 9, **caractérisé en ce que** l'expansion de la matière expansible (20b) est réalisée soit par injection d'un gaz dans cette matière, par exemple de l'azote ou du gaz carbonique, soit par addition d'un agent chimique d'expansion.
